# EUROPÄISCHE PATENTANMELDUNG

(11) **EP 1 555 762 A1**
(43) Veröffentlichungstag der Anmeldung: **20.07.2005**
(21) Anmeldenummer: 05000445.6
(22) Anmeldetag: 12.01.2005
(51) Int. Cl.: H04B 1/38

(54) **Gehäuse, insbesondere Kunststoffgehäuse zur Aufnahme der Basisstation eines Schnurlostelefons**

(30) Priorität: 19.01.2004 DE 102004003064; 25.11.2004 DE 202004018277 U
(71) Anmelder: Boulnois, Edith Maria, 34327 Körle (DE)
(72) Erfinder: Boulnois, Jurgen, 34327 Körle (DE)
(74) Vertreter: WALTHER, WALTHER & HINZ Patentanwälte

(57) **Zusammenfassung**

Gehäuse (1), insbesondere Kunststoffgehäuse zur Aufnahme der Basisstation eines Schnurlostelefons, wobei das Gehäuse (1) zumindest auf einer Seite eine Hochfrequenzstrahlung abschirmende Farb- oder Kunststoffschicht aufweist.

## Beschreibung

Die vorliegende Erfindung betrifft ein Gehäuse, insbesondere Kunststoffgehäuse zur Aufnahme der Basisstation eines Schnurlostelefons.

Basisstationen von Schnurlostelefonen, insbesondere nach dem DECT-Standard senden mit 100 Hz niederfrequent-gepulste Hochfrequenz im Frequenzband von 1880 - 1900 MHz aus. Die Strahlung wird kontinuierlich ausgesandt, auch wenn nicht telefoniert wird. Die von einer solchen Basisstation ausgehende Leistungsflussdichte kann mehrere tausend µM/m² ausmachen. Durch eine derartige Hochfrequenzstrahlung können Gesundheitsschäden hervorgerufen werden.

Aus dem Stand der Technik sind in diesem Zusammenhang Abschirmvorrichtungen mit Metallgeweben oder Metallfolien bekannt (DE 101 62 489). Bekannt ist ebenfalls der Gedanke, ein Gehäuse mit Metallgewebe oder Metallfolie auszustatten, in das solche Basisstationen zwecks Hochfrequenzabschirmung eingestellt werden können. Darüber hinaus sind metallhaltige Farben bekannt, um Arbeits-, Wohn- oder Schlafräume gegen von außen eindringende elektromagnetische Hochfrequenzstrahlung abzuschirmen.

Da die Ausbildung von Gehäusen mit Metallgeweben oder Metallfolien sehr umständlich und infolgedessen auch teuer ist, liegt der Erfindung die Aufgabe zu Grunde, ein Gehäuse insbesondere ein Kunststoffgehäuse der eingangs genannten Art bereitzustellen, das eine ausreichende Abschirmung gegen Hochfrequenzstrahlung einer im Inneren des Gehäuse angeordneten Basisstation eines Schnurlostelefons bietet. Insbesondere soll die Abschirmung so ausgestaltet sein, dass das eigentliche Schnurlostelefon, also der Satellit, nach wie vor funktionsfähig ist, d. h. mit dem Satellit telefoniert werden kann.

Die Aufgabe wird erfindungsgemäß dadurch gelöst, dass das Gehäuse zumindest auf einer Seite eine Hochfrequenzstrahlung abschirmende Farb- oder Kunststoffschicht aufweist.

Es hat sich herausgestellt, dass ein Gehäuse, das vorzugsweise auf seiner Innenseite mit einer derartigen Farb- oder Kunststoffschicht versehen ist, eine weitreichende Abschirmung der Umgebung gegen hochfrequente elektromagnetische Strahlung bewirkt, ohne dass die Nutzung des Handtelefons (Satellit) beeinträchtigt wäre. Das heißt, selbst mit einer derartigen Abschirmung ist die Leistungsflussdichte durch die Basisstation noch ausreichend, um das Handtelefon problemlos nutzen zu können.

Im Einzelnen ist vorgesehen, dass die Farb- oder Kunststoffschicht metallhaltig ist, insbesondere einen Anteil an ferritischen Bestandteilen und anderem elektrisch leitfähigem Material, z. B. entsprechenden Metallen aufweist. Im Einzelnen ist vorgesehen, dass eine Silber-Kupferfarbe zum Einsatz gelangt, die wasserlöslich und harzhaltig ist. Des Weiteren ist vorgesehen, dass die Hochfrequenzstrahlung abschirmende Farb- oder Kunststoffschicht auf das Gehäuse aufgespritzt ist, was die Herstellung sehr vereinfacht, und wobei darüber hinausgehend vorteilhaft diese Hochfrequenzstrahlung abschirmende Farb- oder Kunststoffschicht mit einer Deckschicht aus Kunststoff, z. B. einem Hydro-Softlack, versehen ist, um Beschädigungen an der abschirmenden Beschichtung zu vermeiden. Die Stärke der abschirmenden Farb- und Kupferschicht beträgt ca. 35 bis 40 Mikron; die Schichtdicke wird in Abhängigkeit von der Sendeleistung gewählt. D. h., die Schichtdicke ist so zu wählen, dass das schnurlos Telefonieren noch möglich ist. Die Sendeleistung wird mithin durch die Schichtdicke reguliert.

Um die Basisstation in das Gehäuse einstellen zu können, bzw. auch um mit der Basisstation unmittelbar telefonieren zu können, ist vorgesehen, dass das Gehäuse einen Deckel aufweist. Die Verbindung von Deckel und Gehäuse ist hierbei derart getroffen, dass das Gehäuse durch den Deckel hermetisch abgeschlossen ist. Das heißt, dass durch den hermetischen Abschluss der Gehäuseöffnung durch den Deckel sichergestellt sein soll, dass nicht durch irgendwelche Ritze oder Spalte elektromagnetische Strahlung nach außen entweichen kann.

In diesem Zusammenhang ist vorgesehen, dass der Deckel und die Gehäusewandungen umlaufend einander umlappen. Weiterhin weist der Deckel vorteilhaft parallel zur Gehäusewandung verlaufende Stege auf, die sich bei geschlossenem Deckel parallel zur Wandung des Gehäuses erstrecken, und zwar sowohl längs als auch quer zur Gehäusewandung.

Um die Abschirmung gegen austretende elektromagnetische Strahlung zu erhöhen, ist weiterhin vorteilhaft vorgesehen, dass das Gehäuse im Bereich der Stege des Deckels einen Absatz in etwa der Stärke der Stege aufweist, so dass sich im Bereich der Gehäusekante ein im Querschnitt etwa Z-förmiger Verlauf der Gehäusekante ergibt. Insbesondere hierdurch wird sichergestellt, dass im Wesentlichen keinerlei elektronmagnetische Strahlung aus dem Gehäuse austreten kann. Zusätzliche Sicherheit gegen austretende elektromagnetische Strahlung bietet darüber hinaus eine Ausbildung des Gehäusedeckels derart, dass durch den Gehäusedeckel die Wandung des Gehäuses seitlich überlappt wird. Hieraus wird deutlich, dass in einem solchen Fall eine Abdichtung gegen das Austreten elektromagnetischer Strahlung an drei Kanten zwischen Deckel und Gehäusewandung erfolgt; nämlich zum einen zwischen Stegunterkante und Absatz im Gehäuse, und zusätzlich zwischen vertikaler Wandung des Gehäuses und dem Steg des Deckels und darüber hinaus an der Gehäuseoberkante und dem die Gehäuseoberkante überlappenden Deckel.

Nach einem weiteren Merkmal der Erfindung weist das Gehäuse eine Öffnung für das Kabel der Basisstation auf, wobei diese Öffnung nach Einsetzen des Kabels der Basisstation bei Bedarf noch durch geeignete Maßnahmen, wie z. B. Metallfolie, gegen austretende elektromagnetische Strahlung abgedichtet werden kann.

Gegenstand der Erfindung ist ebenfalls eine Basisstation eines Schnurlostelefons mit einem Gehäuse, insbesondere einem Kunststoffgehäuse gemäß einem oder mehrerer der voranstehend abgehandelten Merkmale.
Anhand der Zeichnung wird die Erfindung nachstehend beispielhaft näher erläutert.
- Figur 1: zeigt das Gehäuse in perspektivischer Darstellung;

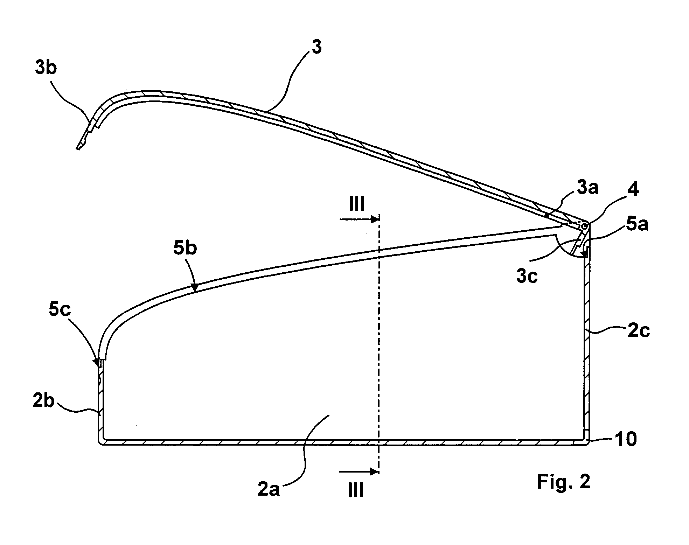

- Figur 2: zeigt einen Schnitt gemäß der Linie II - II aus Figur 1;

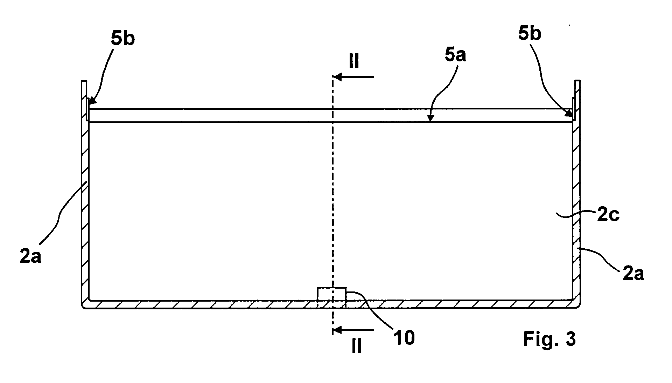

- Figur 3: zeigt einen Schnitt III - III aus Figur 1.

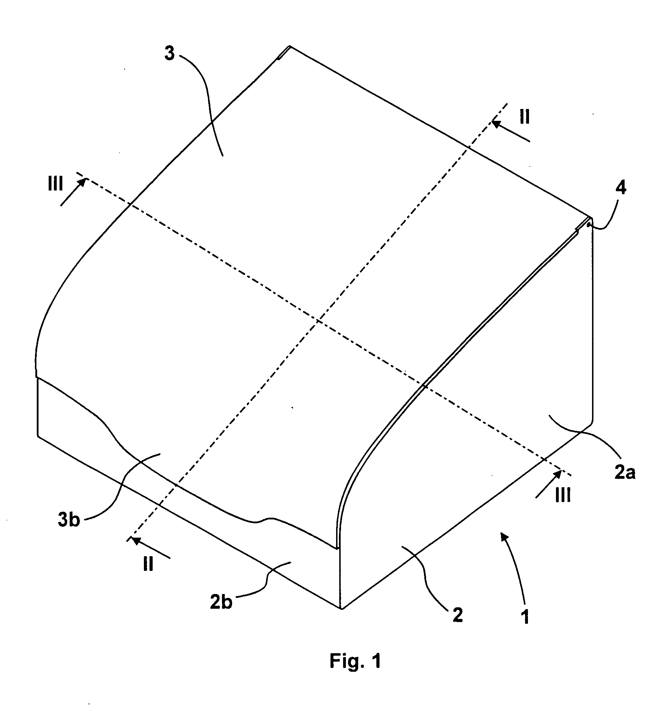

Das in Figur 1 perspektivisch dargestellte Kunststoffgehäuse 1, das natürlich auch aus Metall, Holz oder Pappe hergestellt sein kann, zeichnet sich durch ein Gehäuseunterteil 2 und einen Deckel 3 aus. Der Deckel 3 ist mit dem Gehäuseunterteil durch eine Scharnierachse 4 schwenkbar verbunden. Sowohl das Gehäuseunterteil 2, als auch der Deckel 3 besitzen auf ihrer Innenseite eine vollflächige Beschichtung in Form einer Kunststoff- oder Farbschicht zur Abschirmung gegen Hochfrequenzstrahlung einer im Inneren des Gehäuses angeordneten Basisstation (nicht dargestellt).

Wesentlich bei der Ausgestaltung des Gehäuses ist, dass die Konstruktion derart ist, dass zwischen Gehäusedeckel und Gehäuseunterteil keinerlei Schlitze oder Spalte bestehen, die eine unmittelbare Verbindung zwischen Gehäuseinnerem und Umgebung ermöglichen; d. h., das Gehäuse ist hermetisch gegenüber der Umgebung abgeschlossen. Insofern weist der Deckel 3 einen Steg 3a auf, der sich parallel zur Gehäusewandung 2a erstreckt. Das heißt, die beiden Längskanten des Gehäusedeckels weisen einen solchen parallel zur Längskante der Gehäusewandung und quer zur Gehäusewandung sich erstreckenden Steg 3a auf.

Im Bereich des vorderen Endes des Gehäuses 1 ist die Deckeloberseite 3b die Gehäusewandung 2b überlappend nach unten gezogen, so dass der Deckel (bei 3b) die Frontwandung 2b des Gehäuses ähnlich dem Steg 3a überdeckt.

Im hinteren Bereich, d. h. der Rückwandung 2c des Gehäuses zugewandt, besitzt der Deckel ebenfalls einen Steg 3c, der sich parallel zur Gehäusewandung 2c erstreckt. Im Bereich der Stege 3a, 3b und 3c und der Gehäusewandung 2b besitzt die Gehäusewandung einen Absatz 5a-5c, so dass in jedem Bereich der Verbindung zwischen Deckel 3 und Gehäusewandung ein im Querschnitt Z-förmiger Verlauf der Gehäusewandung zu erkennen ist. Durch diesen Z-förmigen Verlauf der Gehäusewandung zur Aufnahme des Deckels wird erreicht - wie dies bereits auch zuvor beschrieben worden ist - dass im Gehäuseinneren entstehende elektromagnetische Wellen keinen direkten Zugang in die Umgebung haben. Vielmehr wird durch die Z-förmige Ausgestaltung der Gehäusekante und einer korrespondierenden Gestaltung des Deckels mit einer entsprechenden Überlappung des Deckels seitlich über die Gehäusekante erreicht, dass das Gehäuse tatsächlich die Basisstation gegen austretende elektromagnetische Strahlung hermetisch abschirmt.

Das Gehäuse 1 besitzt darüber hinaus im Bereich der Gehäuserückwandung 2c eine Öffnung 10 für das Kabel der Basisstation.

## Patentansprüche

1. Gehäuse (1), insbesondere Kunststoffgehäuse zur Aufnahme der Basisstation eines Schnurlostelefons,
**dadurch gekennzeichnet,**
**dass** das Gehäuse (1) zumindest auf einer Seite eine Hochfrequenzstrahlung abschirmende Farb- oder Kunststoffschicht aufweist.

2. Gehäuse nach Anspruch 1,
**dadurch gekennzeichnet,**
**dass** die Farb- oder Kunststoffschicht metallhaltig ist.

3. Gehäuse nach Anspruch 1,
**dadurch gekennzeichnet,**
**dass** die Hochfrequenzstrahlung abschirmende Farb- oder Kunststoffschicht auf der Innenseite des Gehäuses (1) aufgebracht ist.

4. Gehäuse nach einem oder mehrerer der voranstehenden Ansprüche,
**dadurch gekennzeichnet,**
**dass** die Hochfrequenzstrahlung abschirmende Farb- oder Kunststoffschicht auf das Gehäuse (1) aufgespritzt ist.

5. Gehäuse nach einem oder mehrerer der voranstehenden Ansprüche,
**dadurch gekennzeichnet,**
**dass** die Hochfrequenzstrahlung abschirmende Farb- oder Kunststoffschicht zur Vermeidung von Beschädigungen mit einer Deckschicht aus Kunststoff versehen ist.

6. Gehäuse nach einem oder mehrerer der voranstehenden Ansprüche,
**dadurch gekennzeichnet,**
**dass** das Gehäuse (1) einen Deckel (3) aufweist.

7. Gehäuse nach Anspruch 6,
**dadurch gekennzeichnet,**
**dass** das Gehäuse (1) durch den Deckel (3) hermetisch abgeschlossen ist.

8. Gehäuse nach einem oder mehrerer der voranstehenden Ansprüche,
**dadurch gekennzeichnet,**
**dass** der Deckel (3) und die Gehäusewandung umlaufend einander überlappen.

9. Gehäuse nach einem oder mehrerer der voranstehenden Ansprüche,
**dadurch gekennzeichnet,**
**dass** der Deckel (3) parallel zur Gehäusewandung verlaufende Stege (3a, 3b, 3c) aufweist.

10. Gehäuse nach Anspruch 9,
**dadurch gekennzeichnet,**
**dass** das Gehäuse (1) im Bereich der Stege (3a, 3b, 3c) des Deckels (3) einen Absatz (5a-5d) in etwa der Stärke der Stege aufweist, so dass sich im Bereich der Gehäusekante zum Deckel (3) ein im Querschnitt Z-förmiger Verlauf der Gehäusekante ergibt.

11. Gehäuse nach einem oder mehrerer der voranstehenden Ansprüche,
**dadurch gekennzeichnet,**
**dass** der Gehäusedeckel (3) die Wandung des Gehäuses (1) seitlich überlappt.

12. Gehäuse nach einem oder mehrerer der voranstehenden Ansprüche,
**dadurch gekennzeichnet,**
**dass** das Gehäuse (1) eine Öffnung (10) für das Kabel der Basisstation aufweist.

13. Gehäuse nach einem oder mehrerer der voranstehenden Ansprüche,
**dadurch gekennzeichnet,**
**dass** die Farb- oder Kunststoffschicht Silber- und Kupferanteile aufweist.

14. Gehäuse nach einem oder mehrerer der voranstehenden Ansprüche,
**dadurch gekennzeichnet,**
**dass** die Schichtdicke der Farb- und Kunststoffschicht 35 bis 40 Mikron beträgt.

15. Gehäuse nach einem oder mehrerer der voranstehenden Ansprüche,
**dadurch gekennzeichnet,**
**dass** das Gehäuse aus ABS besteht.

16. Basisstation eines Schnurlostelefons mit einem Gehäuse, insbesondere einem Kunststoffgehäuse gemäß einem oder mehrerer der voranstehenden Ansprüche.
